# EUROPÄISCHE PATENTSCHRIFT

(11) **EP 0 536 616 B1**
(45) Veröffentlichungstag und Bekanntmachung des Hinweises auf die Patenterteilung: **08.06.1994**
(21) Anmeldenummer: 92116536.1
(22) Anmeldetag: 28.09.1992
(51) Int. Cl.: A47J 31/40

(54) **Kaffeemaschinenautomat**
Automatic coffee machine
Machine à café automatique

(30) Priorität: 11.10.1991 DE 4133697
(43) Veröffentlichungstag der Anmeldung: 14.04.1993
(73) Patentinhaber: HGZ Maschinenbau AG, CH-8108 Dällikon - ZH (CH)
(72) Erfinder: Sager, Peter, CH-8113 Boppelsen (CH)
(74) Vertreter: Rehberg, Elmar, Dipl.-Ing.

(56) Entgegenhaltungen:
- EP-A- 0 237 399
- EP-A- 0 270 141
- WO-A-82/01120
- DE-A- 3 422 432
- DE-C- 3 843 568
- GB-A- 2 008 394
- US-A- 2 827 845

## Beschreibung

Die Erfindung bezieht sich auf einen Kaffeemaschinenautomaten, insbesondere für Einzeltassen- und Kännchenfertigung, mit einem ein Gehäuse aufweisenden Durchlauferhitzer für die Bereitstellung von Heißwasser, mit einer Einrichtung zur Zufuhr von Kaffeepulver , mit einer Brühvorrichtung, die einen aus einem stationär mit vertikaler Achse angeordneten Rohrabschnitt sowie zwei Verschlußstücken gebildeten Brühraum aufweist, der zumindest teilweise in dem Durchlauferhitzer angeordnet ist und bei dem zumindest ein Teil des Rohrabschnitts des Brühraums von dem Heißwasser des Durchlauferhitzers umspült ist, und mit einem Axialantrieb für die Bewegung des oberen Verschlußstücks in Richtung der Achse des Rohrabschnitts, einem Antrieb für die Bewegung des oberen Verschlußstücks in eine Parkstellung seitlich des Rohrabschnitts und in eine Bereitschaftsstellung in der Achse sowie einem Vertikalantrieb für das untere Verschlußstück.

Unter einem Kaffeemaschinenautomaten wird eine Maschine verstanden, bei der die Vorgänge des Mahlens des Kaffeepulvers, des Einbringens des Kaffeepulvers in den Brühraum, der Brühvorgang selbst und der Ausstoß des ausgelaugten Kaffeepulvers sowie das Ausschieben der ausgelaugten und ausgepreßten Tablette von Kaffeepulver automatisch erfolgen, ohne daß einer dieser oder weiterer Verfahrensschritte manuell ausgelöst oder unterstützt werden müßten. Es versteht sich aber, daß der Kaffeemaschinenautomat zur Durchführung eines Zyklusses durch Drücken eines Schalters oder ähnlich in Gang gesetzt werden muß. Die Erfindung ist auch auf einen Mengenfrischbrühautomaten anwendbar.

Ein Kaffeemaschinenautomat der eingangs beschriebenen Art ist aus der DE-C-38 43 568 bekannt. Das obere Verschlußstück dieser Brühvorrichtung ist auf einem Schlitten gelagert, der seinerseits auf einen Deckelteil des Durchlauferhitzers, der als Gleitbahn ausgebildet ist, in horizontaler Richtung bewegbar ist. Hierzu ist ein linear hin- und hergehender Antrieb für die Bewegung des oberen Verschlußstücks in die Park- und in die Bereitschaftsstellung in der Achse des Rohrabschnitts vorgesehen. Auf dem Schlitten ist ein Axialantrieb für die Bewegung des oberen Verschlußstücks in Richtung der Achse des Rohrabschnitts mitfahrend angeordnet, wobei diese beiden Antriebe nacheinander in Tätigkeit gesetzt werden. Das obere Verschlußstück ist zweiteilig ausgebildet und besteht aus einem Tragteil und einem zumindest teilweise kegelförmigen Zentrierteil, das eine einzige Dichtung für den Abschluß des Brühraums einerseits sowie für die Abdichtung des Einlasses des Heißwassers andererseits trägt. Das Zentrierteil ist an dem Tragteil sowohl axial als auch radial begrenzt beweglich gelagert, um eine Selbstzentrierung am oberen Rand des Rohrabschnitts zu ermöglichen, auf den sich die Dichtung nach ihrer Zentrierung durch das Zentrierteil als Anschlag und Ventilsitz aufsetzt. Dabei wird gleichzeitig der Brühraum einerseits und der Einlaß des Heißwassers andererseits abgedichtet. Auch das untere Verschlußstück, welches nach Art eines Kolbens ausgebildet und in dem Rohrabschnitt geführt ist, verfügt über einen Vertikalantrieb, der einen doppelt wirkenden, hydraulisch beaufschlagten Kolben aufweist. Bei diesem bekannten Kaffeemaschinenautomaten ist die genaue Positionierung des oberen Verschlußstücks in der Achse des Rohrabschnitts der Brühvorrichtung nur durch die zweiteilige Bauweise des oberen Verschlußstücks möglich. Der sich exakt radial zur Achse des Rohrabschnitts bewegende lineare Antrieb muß relativ großbauend ausgebildet werden, da die an dem oberen Verschlußstück angreifenden Antriebselemente sowie der zugehörige Motor auf der dem Rohrabschnitt abgekehrten Seite des oberen Verschlußstücks angeordnet sein müssen, um z. B. in der Parkstellung die obere Öffnung des Rohrabschnitts nicht zu verstellen, damit beispielsweise das Kaffeepulver ungehindert in den Innenraum des Rohrabschnitts eingebracht werden kann. Bedingt durch diese ausladende Bauweise des Antriebs und eine erforderliche Abstützung ist es schwierig, das obere Verschlußstück mit hinreichender Genauigkeit in die Bereitschaftsstellung zu überführen. Hinzu kommen noch durch unterschiedliche Temperaturen, also im heißen oder im kalten Zustand, auf den Linearantrieb einwirkende Ausdehnungsprobleme. Der für diesen linearen Antrieb erforderliche große Platzbedarf ist in vielen Fällen störend, insbesondere, wenn es um die Bereitstellung von schmalen Baugruppen an zusammengesetzten Maschinen geht. Der Schlitten vergrößert schließlich die zu bewegende Masse. Er muß in nachteiliger Weise seitlich, also außerhalb seines Schwerpunkts, angetrieben werden und diese aufwendige Konstruktion setzt voraus, daß der Deckelteil des Durchlauferhitzers als Gleitbahn ausgebildet ist. Auch der hydraulisch ausgebildete vertikale Antrieb für das untere Verschlußstück bedingt eine Mehrzahl von Dichtungen und Magnetventilen, die zu Störungen Anlaß bieten können. Auch ist das Erreichen genauer, reproduzierbarer Stellungen des unteren Verschlußstücks relativ zur Achse der Brühvorrichtung und die Kontrolle dieser Stellungen nur beschränkt möglich.

Ein weiterer Kaffeemaschinenautomat ist aus der US-PS 2 827 845 bekannt. Auch dort weist die Brühvorrichtung einen Rohrabschnitt auf, der mit vertikaler Achse angeordnet ist und teilweise bereits in dem Gehäuse des Durchlauferhitzers angeordnet ist, so daß damit eine weitgehende Konstanz der Auslauftemperatur des Kaffeegetränks unabhängig von der zeitlichen Abfolge einzelner Brühzyklen erreicht wird. In Verbindung mit diesem Rohrabschnitt findet ein einteilig ausgebildetes oberes Verschlußstück Verwendung, welches vermittels eines einzigen Antriebs sowohl radial zur Achse des Rohrabschnitts des Brühraums als auch in Richtung der Achse des Rohrabschnitts verfahrbar angeordnet ist. Das Verschlußstück selbst ist kegelförmig ausgebildet und mit einer Dichtung versehen, die lediglich die Funktion des Abdichtens des Brühraums nach oben erfüllt, da die Heißwasserzufuhr im Bereich des unteren Verschlußstücks vorgesehen ist. Auch das untere Verschlußstück ist kegelförmig ausgebildet und mit einer Dichtung versehen. Ein solcher Brühraum mit kegelförmigen Verschlußstücken hat jedoch den Nachteil, daß es nicht möglich ist, diese Verschlußstücke in dem Rohrabschnitt kolbenartig zu bewegen und beispielsweise das lose eingefüllte Kaffeepulver zu einer Tablette vorzupressen. Auch ein Trockenpreßvorgang und ein Trockenauswurf sind damit nicht möglich. Durch die kegelige Ausbildung der beiden Verschlußstücke kommt es andererseits auf eine genaue Positionierung zur Achse des Rohrabschnitts nur im begrenztem Maß an.

Ein weiterer Kaffeemaschinenautomat ist aus der WO 82 01 120 bekannt. Der Brühraum aus einem stationär angeordneten Rohrabschnitt mit vertikaler Achse ist dort innerhalb einer Trägerplatte vorgesehen, die über eine Führungsstangen aufweisende Konstruktion mit einer zweiten Trägerplatte verbunden ist. In der zweiten Trägerplatte sind hydraulisch betätigbare Kolben/Zylinder-Einheiten vorgesehen, mit deren Hilfe zwei kolbenartige Verschlußstücke an jedem Ende des Rohrabschnitts in diesen einfahrbar bzw. in dem Rohrabschnitt bewegbar sind. Somit besteht hier nicht das Problem der achsgenauen Positionierung der Verschlußstücke, weil beide Verschlußstücke ausschließlich axial bewegbar sind. Zusätzlich ist ein verschwenkbares Trichterstück vorgesehen, welches dem Einbringen des gemahlenen Kaffeepulvers von der Seite her in den Brühraum und dem Abtransport der ausgelaugten Tablette Kaffeepulver aus dem Brühraum dient.

Die Erfindung beschäftigt sich mit der Problematik, bei einem Kaffeemaschinenautomaten der eingangs beschriebenen Art eine genauere Positionierung des oberen Verschlußstücks des Brühraums ausgehend von der Parkstellung in die Bereitschaftsstellung und die anschließende Brühstellung zu erreichen.

Erfindungsgemäß wird dies bei dem Kaffeemaschinenautomaten der eingangs beschriebenen Art dadurch erreicht, daß das obere Verschlußstück an einem Dreharm angeordnet ist, der um ein ortsfestes Lager mit vertikaler Achse schwenkbar gelagert ist, daß der Antrieb für die Bewegung des oberen Verschlußstücks in die Park- und in die Bereitschaftsstellung ein Schwenkantrieb um die vertikale Achse ist, daß das obere Verschlußstück einteilig ausgebildet ist und vermittels des Axialantriebs, der auf dem Dreharm angeordnet ist, zum Erreichen der Brühstellung in den Rohrabschnitt dichtend einfahrbar ist.

Von besonderer Bedeutung ist die Verwendung eines Dreharms in Verbindung mit einem Schwenkantrieb. Dieser Dreharm besitzt eine vorgegebene Länge, die insoweit nicht veränderbar ist, so daß die Positionierung des oberen Verschlußstücks bezüglich dieser einen Koordinate sehr genau und reproduzierbar eingehalten wird. Die absolute Länge des Dreharms, also die Entfernung seines Lagers von der vertikalen Achse des Rohrabschnitts, ist wesentlich kürzer als die Abstützung eines Linearantriebs, so daß sich Temperatureinflüsse und hierdurch bewirkte Längenänderungen nur unwesentlich auswirken können. Die Anordnung des Lagers des Dreharms kann dann ohnehin in einem Bereich des Deckelteils des Durchlauferhitzers stattfinden, an dem Temperaturunterschiede kaum auftreten. Es entfällt vorteilhaft die Ausbildung der Oberfläche des Deckelteils als Gleitbahn, da eine gleitende Berührung vermieden wird. In der Richtung senkrecht zur Erstreckung des Dreharms bzw. hinsichtlich dieser Koordinate wird das im Schwenkantrieb vorhandene Spiel vorteilhaft genutzt, welches die Restzentrierung des Verschlußstücks zur Achse des Rohrabschnitts zuläßt. Hierdurch bedingt ist es möglich, daß das obere Verschlußstück vorteilhaft einteilig und damit einfacher ausgebildet werden kann. Unter dieser Einteiligkeit ist zu verstehen, daß das obere Verschlußstück keine zwei relativ zueinander beweglichen Teile besitzen muß, wie es im Stand der Technik hinsichtlich eines Tragteils und eines Zentrierteils der Fall ist. Selbstverständlich kann das einstückige Verschlußstück aus mehreren Teilen zusammengesetzt sein; so muß es beispielsweise eine Dichtung und auch ein Sieb tragen. Das obere Verschlußstück ist auch anders zum Rohrabschnitt bewegbar als nach dem Stand der Technik. Es wird nicht auf den oberen Rand des Rohrabschnitts aufgesetzt, sondern über eine längere Strecke so geführt, daß es in den Rohrabschnitt dichtend einfahrbar ist. Bei dieser Bewegung über eine längere Kontaktstrecke wird das Spiel im Schwenkantrieb für Zentrierzwecke benutzt.

Ein weiterer Vorteil ist die einfachere und mit weniger Teilen behaftete Ausbildung. Die Verwendung eines Dreharms in Verbindung mit einem Schwenkantrieb führt auch vorteilhaft dazu, daß der Raumbedarf für diese Anordnung verringert wird, so daß eine solche Brühgruppe sehr schmalbauend genutzt werden kann. Die am Verschlußstück vorgesehene Dichtung muß nur noch den Brühraum nach außen abschließen, und zwar obwohl das obere Verschlußstück den Einlaß für das Heißwasser in den Brühraum trägt.

Es ist von Vorteil, wenn das ortsfeste Lager des Dreharms auf dem Gehäuse des Durchlauferhitzers angeordnet ist. Damit ist die Gewähr dafür gegeben, daß durch die im Durchlauferhitzer gesteuert entwickelte Wärme auch eine Temperierung des Lagers und des Dreharms erfolgt, so daß diese Teile im Betrieb etwa konstante Temperatur aufweisen. Damit werden Längenänderungen des Dreharms infolge unterschiedlicher Temperaturen vermieden.

Der Schwenkantrieb des Dreharms kann vorteilhaft einen Elektromotor mit nachgeschaltetem Schneckengetriebe aufweisen, wobei der Elektromotor und die Schnecke auf dem Dreharm und das Schneckenrad ortsfest auf einem ortsfesten Zapfen des Lagers angeordnet sind. Diese Ausbildung läßt reproduzierbar einerseits eine genaue Winkelpositionierung beim Verschwenken des Dreharms zu. Andererseits stellt das nachgeschaltete Schneckengetriebe ein ausreichendes Spiel für den Schwenkantrieb zur Verfügung, der die Zentrierung des Verschlußstücks einschließlich des Dreharms in der anderen Richtung ermöglicht.

Auch der Axialantrieb für das obere Verschlußstück kann einen Elektromotor mit nachgeschaltetem Schneckengetriebe und einer Mutter/Spindel-Einheit aufweisen, wobei das die Mutter bildende Schneckenrad auf dem Dreharm drehbar gelagert ist und das einteilige obere Verschlußstück an der Spindel befestigt ist. Das Verschlußstück bzw. die Spindel ist in Richtung der Achse des Rohrabschnitts verdrehgesichert geführt, so daß die Drehbewegung der Mutter bzw. des Schneckenrads in eine reine Axialbewegung umgeformt wird. Damit sind auch erhebliche Untersetzungen überbrückbar, so daß die erreichte Endposition in der Brühstellung reproduzierbar und sehr genau erreichbar ist.

Die beiden Elektromotore können mit ihren Achsen parallel zueinander auf dem Dreharm gelagert sein. Damit erhöht sich zwar einerseits die zu bewegende Masse des Dreharms bzw. auf dem Dreharm, andererseits lassen sich aber so die beiden Elektromotore auf kleinem Raum unterbringen, so daß sie vergleichsweise wenig ausladen und die Baubreite einer Brühgruppe nicht unnötig vergrößern.

In Verbindung mit der besonderen Ausbildung und dem Antrieb des oberen Verschlußstücks ist auch ein Axialantrieb für das untere Verschlußstück in Form eines Elektromotors mit nachgeschaltetem Schneckengetriebe und einer Mutter/Spindel-Einheit vorgesehen. Die beiden Antriebe für die Vertikalbewegungen der Verschlußstücke können zumindest ähnlich, aber auch identisch, ausgebildet sein. Damit wird es möglich, auch das untere Verschlußstück, welches den Auslauf für das Kaffeegetränk trägt, sehr genau zu positionieren und die jeweiligen Stellungen auch genau zu überwachen. Dies ist besonders bedeutsam für das Pressen der Kaffeepulvertablette, eine nachfolgende Druckentlastung, die Steuerung unterschiedlicher Tablettenhöhen, wie sie für eine Einzeltassenfertigung im Vergleich zu einer Kännchenfertigung erforderlich sind, sowie für sämtliche anderen Positionen der beiden Verschlußstücke zueinander bis hin zum Trockenauswurf.

Vorteilhaft können als Elektromotore Gleichstrommotore vorgesehen sein, die die Präzision und Genauigkeit der erreichten Positionen zusätzlich verbessern. Auch sind solche Gleichsstrommotore besonders einfach ansteuerbar.

Dem Dreharm kann ein Widerlager für Abstützzwecke zugeordnet sein. Dieses Widerlager wird dann wirksam, wenn der Dreharm und das obere Verschlußstück sich in der ausgerichteten Stellung zur Achse des Rohrabschnitts und eingefahren in den Rohrabschnitt befinden und über das untere Verschlußstück Druck ausgeübt wird, also insbesondere beim Pressen der Kaffeepulvertablette oder beim Auspressen derselben. Noch größere Kräfte treten beim Durchströmen der Kaffeepulvertablette bei aufgebautem Brühdruck auf. Um ein Ausweichen des Dreharms nach oben zu vermeiden und die auftretenden Kräfte besser aufzunehmen, stützt sich in diesen Fällen der Dreharm nach oben an dem Widerlager ab.

Der Schwenkantrieb und der Axialantrieb für das obere Verschlußstück sind vorteilhaft voneinander unabhängig, wobei beide Antriebe auf dem Dreharm und damit mitschwenkend vorgesehen sind. Die beiden Antriebe werden sinnfällig nacheinander in Tätigkeit gesetzt, wie es die entsprechende Bewegung erfordert. Mit dem Dreharm ist auch mindestens ein Abstreifer, vorzugsweise zwei Abstreifer, verbunden, so daß die Schwenkbewegung zugleich für eine Säuberung der Oberfläche des Deckelteils des Durchlauferhitzers von Kaffeepulverresten genutzt wird. Der zweite Abstreifer stellt eine zusätzliche Sicherheit dar und nimmt Restmengen von Kaffeepulver, die vom ersten Abstreifer nicht vollständig erfaßt werden, mit.

Der den Brühraum bildende Rohrabschnitt kann im Unterteil des Gehäuses des Durchlauferhitzers vorgesehen sein, wobei an dem unterem Verschlußstück der Auslaß für das Kaffeegetränk vermittels eines Schlauchs angeschlossen ist. Damit befindet sich der gesamte Rohrabschnitt und insoweit der gesamte Brühraum innerhalb der Zone, die vom Durchlauferhitzer auf konstanter Temperatur gehalten wird, was sich vorteilhaft auf die Güte und Gleichmäßigkeit des erzeugten Kaffeegetränks auswirkt. Durch die Anordnung des Einlasses für Heißwasser im Bereich des oberen Verschlußstücks und des Auslasses für das Kaffeegetränk im Bereich des unteren Verschlußstücks sind eindeutige Durchströmverhältnisse für das Wasser durch die Kaffeepulvertablette gegeben, so daß das Kaffeepulver optimal ausgelaugt bzw. ausgenutzt wird.

Nachfolgend wird die Erfindung anhand eines bevorzugten Ausführungsbeispiels weiter erläutert und beschrieben. Es zeigt:
- Figur 1: einen Vertikalschnitt durch die wesentlichen Teile eines Kaffeemaschinenautomaten,
- Figur 2: einen elektrischen und hydraulischen Schaltplan, der die Verbindung der einzelnen Teile verdeutlicht und
- Figur 3: eine Draufsicht auf die wesentlichen Teile des Kaffeemaschinenautomaten von oben.

Der Kaffeemaschinenautomat weist einen Durchlauferhitzer 1 auf, dessen Gehäuse aus einem Unterteil 2 und einem Deckelteil 3 besteht, die mit Hilfe einer Dichtung und einer Anzahl Befestigungsschrauben zusammengehalten werden. Aus Übersichtlichkeitsgründen ist hier die Teilung nicht dargestellt. Im Innern des Gehäuses 2, 3 ist somit ein Innenraum 4 gebildet, in welchem eine Heizspirale 5 angeordnet ist, mit deren Hilfe das im Innenraum 4 befindliche Wasser aufgeheizt wird. Der Eintritt des Kaltwassers erfolgt über einen nicht dargestellten Stutzen, der an der tiefsten Stelle des Unterteils 2 vorgesehen ist.

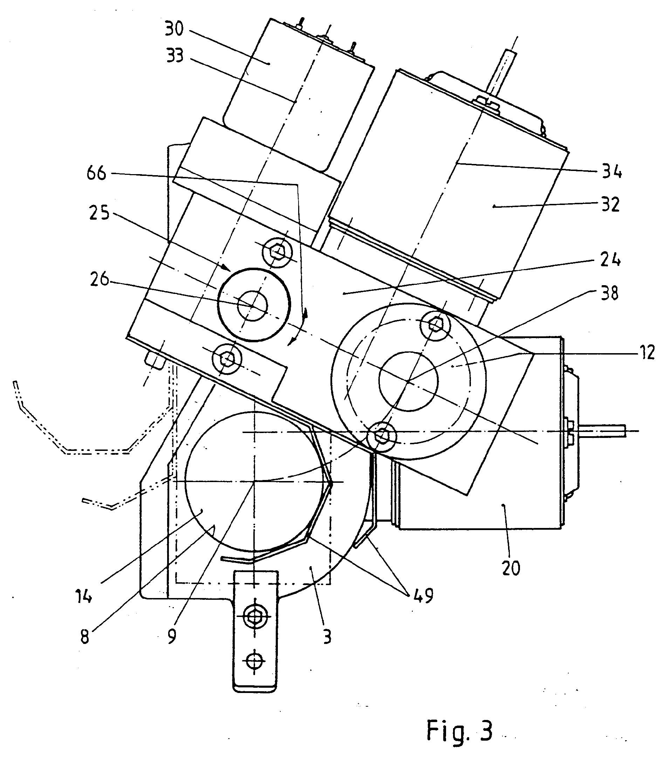

In einer Ausbuchtung 6 des Gehäuses 2, 3 ist eine Brühvorrichtung 7 untergebracht. Diese Brühvorrichtung 7 weist einen Rohrabschnitt 8 auf, der zylindermantelförmig ausgebildet ist und dessen Achse 9 vertikal angeordnet ist. Der Rohrabschnitt 8 ist vergleichsweise dünnwandig ausgebildet und mit Hilfe von Dichtungen 10 und 11 abgedichtet gegenüber dem Innenraum 4 in dem Gehäuse 2, 3 des Durchlauferhitzers 1 gelagert, wobei der Rohrabschnitt 8 zwischen dem Unterteil 2 und dem Deckelteil 3 aufgenommen und eingespannt ist. Weitere wesentliche Bestandteile der Brühvorrichtung 7 sind ein oberes Verschlußstück 12 und ein unteres kolbenartiges Verschlußstück 13. Der Rohrabschnitt 8 und die beiden Verschlußstücke 12 und 13 schließen einen Brühraum 14 ein, in welchem das Kaffeepulver, zu einer Tablette gepreßt, von dem Heißwasser durchströmt und dabei das Kaffeegetränk gebildet wird. Das untere Verschlußstück 13 weist eine Dichtung 15 auf, mit der es in dem Rohrabschnitt 8 nach Art eines Kolbens abgedichtet verfahrbar ist. Das Verschlußstück 13 besitzt ein Durchtrittssieb 16 für das Kaffeegetränk, wobei sich jenseits des Durchtrittssiebs 16 ein Schlauch 17 anschließt, durch den das Kaffeegetränk zum Auslauf des Kaffeemaschinenautomaten gelangt. Mit dem kolbenartigen Verschlußstück 13 ist eine Spindel 18 verbunden. Vermittels eines Schneckengetriebes 19 wird der Vertikalantrieb auf das untere Verschlußstück 13 übertragen. Zu diesem Zweck ist ein Elektromotor 20 (Figur 3) vorgesehen.

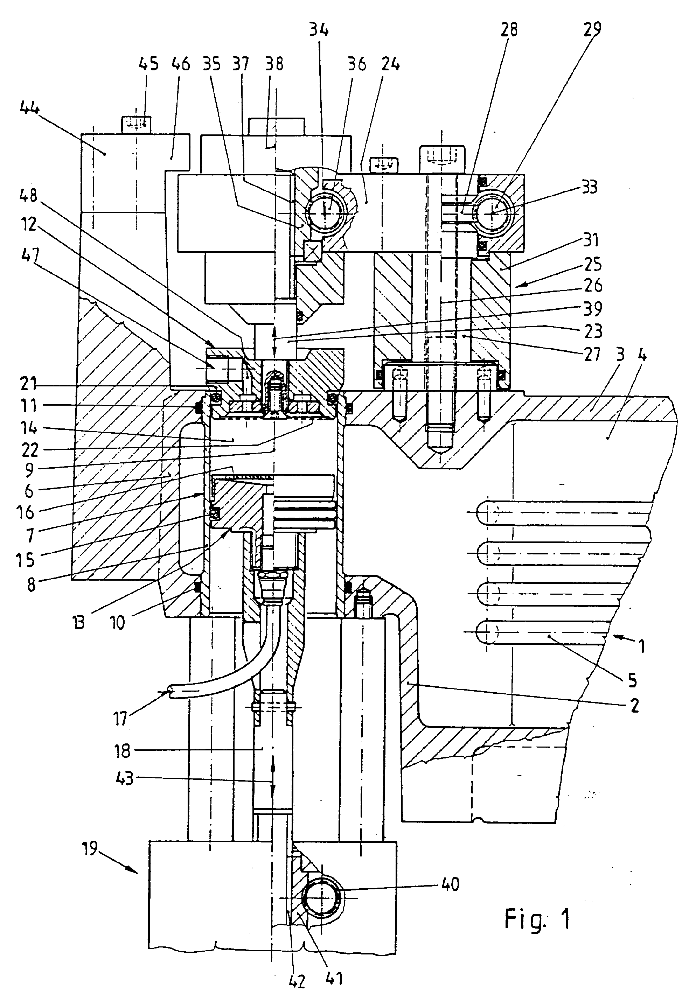

Das obere Verschlußstück 12 ist prinzipiell einteilig ausgebildet, weist eine einzige Dichtung 21 auf und trägt auf der dem Brühraum 14 zugekehrten Seite ein Sieb 22. Das obere Verschlußstück 12 ist mit Hilfe einer Spindel 23 letztlich an einem Dreharm 24 aufgehängt, der mit Hilfe eines Lagers 25 um eine vertikale Achse 26 hin- und herschwenkbar gelagert ist. Im Einzelnen weist das Lager 25 in ortsfester Anordnung auf dem Deckelteil 3 einen Lagerzapfen 27 auf, mit dem ein Schneckenrad 28 drehfest und damit ortsfest verbunden ist. Zugehörig ist in dem Dreharm 24 eine Schnecke 29 drehbar gelagert, für deren Drehung ein Elektromotor 30 (Figur 3) vorgesehen ist. Der Dreharm 24 ist vermittels einer Hülse 31 auf dem Lagerzapfen 27 schwenkbar abgestützt. Damit wird bereits verständlich, daß bei Betätigung des Elektromotors 30 sich die Schnecke 29 am Umfang des feststehenden Schneckenrads 28 entlangbewegt, so daß der Dreharm 24 - je nach Drehrichtung des Elektromotors 30 - eine hin- und herschwenkende Bewegung ausführt. Die eine Endstellung dieser Verschwenkung, bei der sich das obere Verschlußstück 12 von dem Rohrabschnitt 8 der Brühvorrichtung 7 seitlich hinweggeschwenkt befindet (Figur 3), wird als Parkstellung bezeichnet. Die andere Endstellung, in welcher sich das Verschlußstück 12 oberhalb des Brühraums 14 und mit noch nicht in den Rohrabschnitt 8 eingefahrener Dichtung 21 befindet, wird als Bereitschaftsstellung bezeichnet. Wenn in dieser Stellung das obere Verschlußstück 12 teilweise in den Brühraum 14 eingefahren wird, wie dies Figur 1 zeigt, wird die Brühstellung erreicht. Für diese Vertikalbewegung des oberen Verschlußstücks 12 relativ zum Dreharm 24 ist ein weiterer Elektromotor 32 (Figur 3) vorgesehen, der, ebenso wie der Elektromotor 30, auch auf dem Dreharm gelagert ist. Die Achsen 33 und 34 der beiden Elektromotore 30 und 32 sind dabei parallel zueinander angeordnet. Auch dem Elektromotor 32 ist ein Schneckengetriebe aus einem Schneckenrad 35 und einer Schnecke 36 nachgeschaltet, wobei die Schnecke 36 auf dem Dreharm 24 lediglich drehbar gelagert ist und über den Ausgang des Elektromotors 32 direkt angetrieben wird. Das Schneckenrad 35 ist auf dem Dreharm 24 mit Hilfe angedeuteter Kugellager drehbar gelagert und bildet mit einem Innengewinde 37, welches als Trapezgewinde ausgebildet sein kann, zugleich eine Mutter, in welcher die Spindel 23 mit zugehörigem Außengewinde angeordnet ist. Die Spindel 23 ist in Richtung ihrer Achse 38 geführt, also an einer Verdrehung gehindert, so daß auf diese Art und Weise die Drehbewegung des Elektromotors 32 in eine reine vertikale Axialbewegung der Spindel 23 gemäß Doppelpfeil 39 umgeformt wird. Hieraus wird verständlich, daß auf diese Art und Weise über den Elektromotor 32 je nach Drehrichtung das obere Verschlußstück 12 aus dem Brühraum 14 nach oben ausgefahren bzw. in den Brühraum 14 nach unten eingefahren werden kann. Es versteht sich, daß der Ausfahrvorgang erst dann beendet ist, wenn das Sieb 22 , also der tiefste Teil des oberen Verschlußstücks 12, oberhalb der Oberfläche des Deckelteils 3 zu liegen kommt, so daß eine Berührung mit der Oberfläche des Deckelteils 3 beim anschließenden Verschwenkvorgang in die Parkstellung vermieden wird.

Der Vertikalantrieb für das untere Verschlußstück 13 ist prinzipiell übereinstimmend zu der Ausbildung des Vertikalantriebs des oberen Verschlußstücks 12 ausgebildet, wenngleich dieser Antrieb auf größere Hübe ausgelegt ist. Im Einzelnen ist dem Elektromotor 20 das Schneckengetriebe 19 in Form einer Schnecke 40 und eines Schneckenrads 41 nachgeschaltet. Das Schneckenrad 41 ist wiederum als Mutter ausgebildet und besitzt ein Innengewinde 42, welches mit einem Außengewinde auf der Spindel 18 zusammenarbeitet. Auch die Spindel 18 ist verdrehgesichert axial geführt, so daß auf diese Art und Weise Vertikalbewegungen des unteren Verschlußstücks 13 gemäß Doppelpfeil 43, je nach Drehrichtung des Elektromotors 32, möglich sind.

Dem Dreharm 24 ist ein Widerlager 44 zugeordnet, welches ortsfest an dem Gehäuse 2, 3 des Durchlauferhitzers 1 angeordnet ist und eine zweckmäßig in ihrer Höhe mit Hilfe einer Schraube 45 einstellbare Nase 46 aufweist, die von dem Dreharm 24 bei Erreichen der Bereitschaftsstellung unter Bildung eines geringen Abstands von Bruchteilen eines mm unterfahrbar ist. Beim Einfahren des oberen Verschlußstücks 12 in den Brühraum 14 und erst recht beim Aufbringen des Brühdrucks über das untere Verschlußstück 13 kann sich der Dreharm 24 an der Nase 46 des Widerlagers 44 abstützen, so daß ein Aufbiegen des Dreharms 24 um das Lager 25 nach oben vermieden wird. Dies trägt wesentlich zur Langlebigkeit der Dichtung 21 und zur exakten vertikalen Führung und Abstützung des oberen Verschlußstücks 12 bei.

Für den Einlaß von Heißwasser in den Brühraum 14 ist im oberen Verschlußstück 12 ein Stutzen 47 mit einem anschließenden Kanal 48 vorgesehen, über welchen das Heißwasser durch das Sieb 22 hindurchgedrückt und in den Brühraum 14 bzw. die dort vorgesehene gepreßte Kaffeepulvertablette hindurchgeleitet wird.

Oberhalb der Achse 9 der Brühvorrichtung 10 ist eine nicht dargestellte Kaffeemühle vorgesehen, durch deren Austrittsstutzen das gemahlene Kaffeepulver etwa in der Achse 9 oberhalb des Brühraums 14 in diesen eingebracht werden kann, wenn sich der Dreharm 24 mit dem oberen Verschlußstück 12 in der abgeschwenkten Parkstellung befindet. Mit dem Dreharm 24 kann auch ein nicht dargestellter Einfülltrichter verbunden sein, um eine gewisse Leitwirkung auf das gemahlene und herabfallende Kaffeepulver auszuüben. Für die Entfernung von Kaffeepulver von der Oberfläche des Deckelteils 3 in diesem Bereich sowie für Kaffeepulverreste, die von dem Trockenauswurf einer ausgelaugten Tablette stammen, besitzt der Dreharm zwei Abstreifer 49 (Figur 3), die nacheinander bei einer Schwenkbewegung die Oberfläche des Deckelteils 3 säubern.

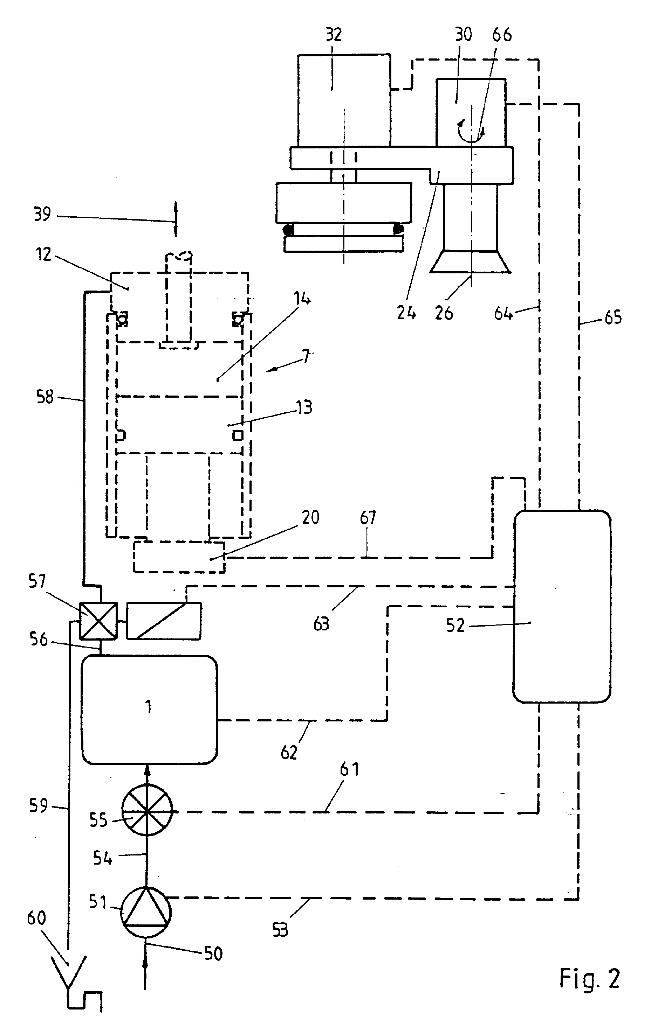

In Figur 2 ist ein vereinfachter Schaltplan des Kaffeemaschinenautomaten dargestellt, wobei die hydraulischen Leitungen in durchgezogener Strichführung und die elektrischen Leitungen in gestrichelter Linienführung angedeutet sind. Eine Kaltwasserleitung 50 führt zu einer Pumpe 51, die von einer elektronischen Steuervorrichtung 52 über eine elektrische Leitung 53 angesteuert wird. Eine Wasserleitung 54 führt von der Pumpe 51 zu einem Wasserdurchflußmesser 55 und von dort zu dem am Unterteil 2 befindlichen Stutzen des Durchlauferhitzers 1. Von dem Durchlauferhitzer 1 führt eine Leitung 56 für Heißwasser zu einem Brühventil 57 und von dort als Leitung 58 durch das obere Verschlußstück 12 in den Brühraum 14. Das Brühventil 57 ist Zwei/Drei-Wegeventil ausgebildet, wobei eine Leitung 59 zu einem Ablauf 60 führt. Von der elektrischen Steuervorrichtung 52 führen eine elektrische Leitung 61 zu dem Wasserdurchlaufmesser 55, eine elektrische Leitung 62 zu der Heizspirale 5 des Durchlauferhitzers 1 sowie parallel geschaltete Leitungen zu einer Temperatursteuerung im Durchlauferhitzer 1, die der Übersichtlichkeit halber nicht dargestellt ist. Eine elektrische Leitung 63 steuert das Brühventil 57. Eine weitere Leitung 64 führt zum Elektromotor 32 für die Verschiebung des oberen Verschlußstücks 12 gemäß Doppelpfeil 39 und eine Leitung 65 zum Elektromotor 30 für die Verschwenkung des Dreharms 24 gemäß Doppelpfeil 66 um die Achse 26. Eine weitere elektrische Leitung 67 führt von der Steuervorrichtung 52 zu dem Elektromotor 20 für das untere Verschlußstück 13.

Figur 3 läßt die Baueinheit aus Dreharm 24 mit dem Axialantrieb 32, 35, 36 und dem Schwenkantrieb 30, 29, 28 erkennen. Die beiden Elektromotore 30 und 32 sind mit ihren Achsen 33 und 34 parallel auf dem Dreharm 24 angeordnet, so daß sie mit diesem verschwenken. Die Verschwenkung erfolgt um die Achse 26 gemäß Doppelpfeil 66, je nach der Drehrichtung des Elektromotors 30. Es ist auch erkennbar, wie dabei die beiden Abstreifer 49 über den Brühraum 14 bzw. die angrenzende Wandung des Deckelteils 3 hinüberfahren und diese Fläche säubern. Gleichzeitig wird durch diese Bewegung auch der Trockenauswurf realisiert, d. h. die von dem unteren Verschlußstück 13 angehobene ausgelaugte Kaffeepulvertablette kann durch diese Bewegung entfernt werden. Aus Figur 3 ist weiterhin die Lage des Elektromotors 20 erkennbar. Sämtliche drei Motore 20, 30, 32 sind so ausgebildet und relativ zueinander angeordnet, daß eine schmalbauende Brühgruppe entsteht.

Die Funktion des Kaffeemaschinenautomaten wird in der Zusammenschau der Figuren wie folgt erläutert:

Bei der täglichen Inbetriebnahme des Kaffeemaschinenautomaten z. B. zu Beginn der Frühstückszeit o. dgl. wird die Steuervorrichtung 52 in Tätigkeit gesetzt. Das Brühwasser wird mit Hilfe der Heizspirale 5 erwärmt, wobei gleichzeitig auch die Brühvorrichtung 7 mit ihren wesentlichen Teilen aufgeheizt wird. Das untere Verschlußstück 13 befindet sich beispielsweise in der in Figur 1 dargestellten Stellung und wird demzufolge ebenfalls aufgeheizt, weil der Rohrabschnitt 8 über den gesamten Umfang von sich erwärmendem Wasser umspült wird. Mit dem Aufheizen des Wassers werden auch das Unterteil 2 und das Deckelteil 3 des Gehäuses des Durchlauferhitzers 1 erwärmt, so daß auch das obere Verschlußstück 12, welches an dem Dreharm 24 vorgesehen ist, mitsamt dem Lager 25 entsprechend warm wird. Wenn die Temperaturregeleinrichtung im Innenraum 4 des Durchlauferhitzers 1 anzeigt, daß das Wasser die erforderliche Temperatur angenommen hat, so weisen auch die wesentlichen Bestandteile der Brühvorrichtung 7 bereits die entsprechende Temperatur auf, und es ist die Betriebsbereitschaft des Kaffeemaschinenautomaten gegeben. Durch einen weiteren Schaltvorgang, der mechanisch an der Steuereinrichtung 52 ausgelöst wird, kann die erste Tasse oder ein Kännchen Kaffeegetränk zubereitet werden. Hierzu bleibt der Dreharm 24 mit dem oberen Verschlußstück 12 in der Parkstellung oder er fährt über den Schwenkantrieb 30, 29, 28 in diese Parkstellung, so daß der Brühraum 14 von oben her zugänglich wird. Die in der Achse 9 angeordnete Kaffeemühle wird über die Steuervorrichtung 52 für die zugehörige Zeiteinheit (Tasse oder Kännchen) in Gang gesetzt, so daß eine entsprechende Portion Kaffeepulver in den Brühraum 14 der Brühvorrichtung 7 hinabfällt. Sobald der Mahlvorgang beendet ist, steuert die Steuervorrichtung 52 den Schwenkantrieb 30, 29, 28, so daß der Dreharm 24 mit dem oberen Verschlußstück 12 entsprechend dem Doppelpfeil 66 verschwenkt wird, bis die Achse 38 mit der Achse 9 der Brühvorrichtung 7 fluchtet. Bei diesem Schwenkvorgang ändert sich die wirksame Länge des Dreharms 24 nicht, so daß hier eine relativ genaue Einhaltung dieser Koordinate möglich ist. Wenn der Schwenkantrieb so genau beendet wurde, daß auch die andere Koordinate für die fluchtende Stellung der beiden Achsen 38 und 9 gegeben ist, bestehen keine Schwierigkeiten beim Einfahren des oberen Verschlußstücks 12 in den Rohrabschnitt 8. Wenn diese Koordinate jedoch nicht genau erreicht wurde, wird das im Schwenkantrieb 30, 29, 28. vorhandene Spiel und die hierdurch gegebene Beweglichkeit in Verbindung mit der Gestaltung des oberen Verschlußstücks 12 und des Rohrabschnitts 8, insbesondere dessen oberen Endes, dazu ausgenutzt, um die genau fluchtende Position der beiden Achsen 38 und 9 zu erreichen. Das im Schwenkantrieb 30, 29, 28 vorhandene Spiel ist also gleichsam notwendig, um diese Selbstzentrierung zu ermöglichen. Anschließend wird der Axialantrieb 32, 35, 36 angesteuert, so daß das obere Verschlußstück 12 in beiden Fällen in den Innenraum des Rohrabschnitts 8 einfährt, und zwar bis zu einer Stelle, wie sie etwa in Figur 1 dargestellt ist. Über die Dichtung 21 ist der Brühraum 14 nach oben abgeschlossen. Das Verschlußstück 12 bleibt nun für längere Zeit in Ruhe. Durch Ansteuerung des Vertikalantriebs 20, 40, 41 wird das untere Verschlußstück 13 angehoben, so daß das lose eingefüllte Kaffeepulver zu einer Tablette verdichtet wird. Bei dieser Bewegung stützt sich der Dreharm 24 unter der Nase 46 des Widerlagers 44 ab, so daß das Lager 25 entsprechend entlastet wird. Sobald das Vorpressen der Tablette aus Kaffeepulver geschehen ist, wird der Elektromotor 20 kurzzeitig umgesteuert, so daß die Tablette entlastet wird. In dieser Stellung kann der eigentliche Brühvorgang beginnen, indem die Pumpe 51 über die Leitung 61 und das Brühventil 57 über die Leitung 63 angesteuert werden. Mit dem Wasserdurchflußmesser 55 wird eine der gewünschten Menge des Kaffeegetränks entsprechende Wassermenge an Frischwasser in den Innenraum 4 des Durchlauferhitzers 1 eingebracht und eine entsprechende Menge Heißwasser über die Leitung 58 durch das obere Verschlußstück 12 und über das Sieb 22 verteilt in den Brühraum 14 eingebracht, wo die Tablette aus Kaffeepulver durchdrungen und das Kaffeegetränk über den Schlauch 17 am Auslauf abgegeben wird. Gegen Ende des Durchlaufs des Heißwassers durch den Brühraum 14 wird das Brühventil 57 wieder geschlossen, wobei durch Ansteuerung des Elektromotors 20 ein Nachpressen bzw. Trockenpressen der Kaffeepulvertablette erfolgt. Damit endet dann der Auslauf des Kaffeegetränks. Nach entsprechender Entlastung des unteren Verschlußstücks 13 wird das obere Verschlußstück 12 mit Hilfe des Axialantriebs 32, 35, 36 aus dem Rohrabschnitt 8 ausgefahren und mit Hilfe des Schwenkantriebs 30, 29, 28 in die Parkstellung hinweggeschwenkt. Durch den Vertikalantrieb 20, 40, 41 wird gleichzeitig oder nacheinander das untere Verschlußstück 13 angehoben, so daß die Tablette aus ausgelaugtem Kaffeepulver soweit angehoben wird, daß die Oberkante des unteren Verschlußstücks 13 mit der Oberkante des Deckelteils 3 fluchtet. Durch Betätigung des Schwenkantriebs 30, 29, 28 und mit Hilfe der Abstreifer 49 wird die trockene Kaffeepulvertablette dann auf dem Deckelteil 3 seitlich hinweggefördert und dieser Bereich gereinigt. Anschließend verschwenkt der Dreharm 24 wiederum in die Parkstellung und das untere Verschlußstück 13 kann abgesenkt werden. Ein neuer Brühvorgang kann sich dann anschließen.

Es sei darauf hingewiesen, daß die Steuereinrichtung 52 und die verschiedenen Antriebe sowie die übrigen Einzelheiten der Vorrichtung es gestatten, beliebige Zwischenschritte anzusteuern und weitere Maßnahmen mit ein und derselben Vorrichtung durchzuführen. So ist es beispielsweise vorstellbar, daß die Kaffeepulvermenge für ein Kännchen Kaffeegetränk größer sein muß als die Kaffeepulvermenge für eine Tasse Kaffeegetränk, was durch entsprechende zeitliche Steuerung der Kaffeemühle und auch durch entsprechende Wegsteuerung des unteren Verschlußstücks 13 relativ zum oberen Verschlußstück 12 bewirkt wird. Dabei kann im Sinn einer gleichbleibenden Qualität des Kaffeegetränks bei einem Kännchen Kaffee eine etwas geringere Kaffeepulvermenge eingesetzt werden, als es der doppelten Menge an Kaffeepulver für eine Tasse entspricht.

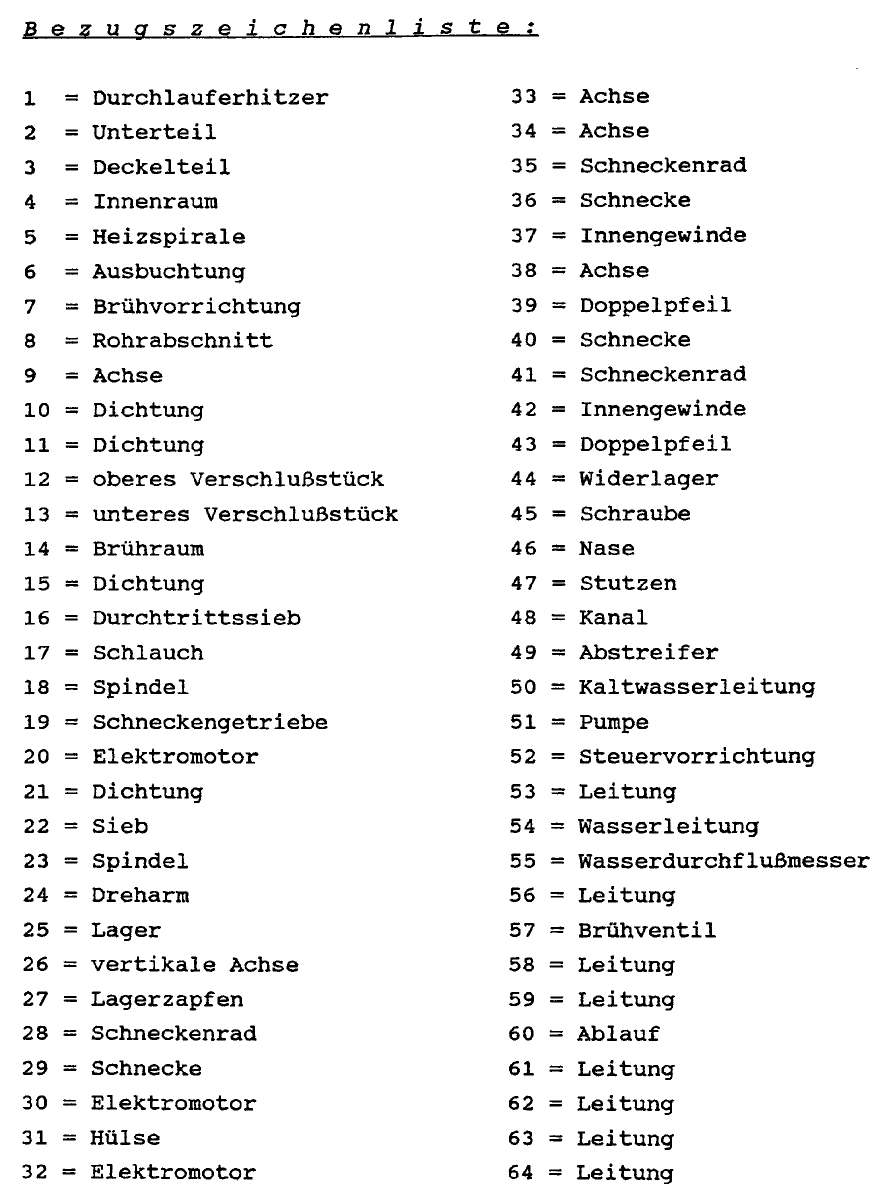

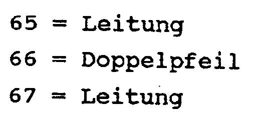

## Patentansprüche

1. Kaffeemaschinenautomat, insbesondere für Einzeltassen- und Kännchenfertigung, mit einem ein Gehäuse (2,3) aufweisenden Durchlauferhitzer (4,5) für die Bereitstellung von Heißwasser, mit einer Einrichtung zur Zufuhr von Kaffeepulver, mit einer Brühvorrichtung (7), die einen aus einem stationär mit vertikaler Achse (9) angeordneten Rohrabschnitt (8) sowie zwei Verschlußstücken (12,13) gebildeten Brühraum (14) aufweist, der zumindest teilweise in dem Durchlauferhitzer angeordnet ist und bei dem zumindest ein Teil des Rohrabschnitts (8) des Brühraums (14) von dem Heißwasser des Durchlauferhitzers umspült ist, und mit einem Axialantrieb für die Bewegung des oberen Verschlußstücks (12) in Richtung der Achse (9) des Rohrabschnitts (8), einem Antrieb für die Bewegung des oberen Verschlußstücks (12) in eine Parkstellung seitlich des Rohrabschnitts (8) und in eine Bereitsschaftsstellung in der Achse (9) sowie einem Vertikalantrieb für das untere Verschlußstück (13), dadurch gekennzeichnet, daß das obere Verschlußstück (12) an einem Dreharm (24) angeordnet ist, der um ein ortsfestes Lager (25) mit vertikaler Achse (26) schwenkbar ist, daß der Antrieb für die Bewegung des oberen Verschlußstücks (12) in die Park- und in die Bereitschaftsstellung ein Schwenkantrieb (30, 29, 28) um die vertikale Achse (26) ist, daß das obere Verschlußstück (12) einteilig ist und vermittels des Axialantriebs (32, 35, 36), der auf dem Dreharm (24) angeordnet ist, zum Erreichen der Brühstellung in den Rohrabschnitt (8) dichtend einfahrbar ist.

2. Kaffeemaschinenautomat nach Anspruch 1, dadurch gekennzeichnet, daß das ortsfeste Lager (25) des Dreharms (24) auf dem Gehäuse (3, 2) des Durchlauferhitzers (1) angeordnet ist.

3. Kaffeemaschinenautomat nach Anspruch 1 oder 2, dadurch gekennzeichnet, daß der Schwenkantrieb (30, 29, 28) des Dreharms (24) einen Elektromotor (30) mit nachgeschaltetem Schneckengetriebe (29, 28) aufweist, wobei der Elektromotor (30) und die Schnecke (29) auf dem Dreharm (24) und das Schneckenrad (28) ortsfest auf einem ortsfesten Zapfen (27) des Lagers angeordnet ist.

4. Kaffeemaschinenautomat nach einem oder mehreren der Ansprüche 1 bis 3, dadurch gekennzeichnet, daß der Axialantrieb (32, 35, 36) für das obere Verschlußstück (12) einen Elektromotor (32) mit nachgeschaltetem Schneckengetriebe (35, 36) und eine Mutter/Spindel-Einheit (23, 35) aufweist, wobei das die Mutter bildende Schneckenrad (35) auf dem Dreharm (24) drehbar gelagert ist und das einteilige Verschlußstück (12) an der Spindel (23) befestigt ist.

5. Kaffeemaschinenautomat nach Anspruch 3 und 4, dadurch gekennzeichnet, daß die beiden Elektromotore (30, 32) mit ihren Achsen (33, 34) parallel zueinander auf dem Dreharm (24) gelagert sind.

6. Kaffeemaschinenautomat nach einem oder mehreren der Ansprüche 1 bis 5, dadurch gekennzeichnet, daß ein Vertikalantrieb (20, 40, 41) für das untere Verschlußstück (13) in Form eines Elektromotors (20) mit nachgeschaltetem Schneckengetriebe (40, 41) und einer Mutter/Spindel-Einheit vorgesehen ist.

7. Kaffeemaschinenautomat nach einem oder mehreren der Ansprüche 1 bis 6, dadurch gekennzeichnet, daß als Elektromotore (20, 30, 32) Gleichstrommotore vorgesehen sind.

8. Kaffeemaschinenautomat nach Anspruch 1 bis 3, dadurch gekennzeichnet, daß dem Dreharm (24) ein Widerlager (44) für Abstützzwecke zugeordnet ist.

9. Kaffeemaschinenautomat nach einem oder mehreren der Ansprüche 1 bis 5, dadurch gekennzeichnet, daß der Schwenkantrieb (30, 29, 28) und der Axialantrieb (32, 35, 36) für das obere Verschlußstück (12) voneinander unabhängig sind, wobei beide Antriebe auf dem Dreharm (24) und damit mitschwenkend vorgesehen sind.

10. Kaffeemaschinenautomat nach Anspruch 1, dadurch gekennzeichnet, daß der den Brühraum (14) bildende Rohrabschnitt (8) im Unterteil (2) des Gehäuses des Durchlauferhitzers (1) vorgesehen ist und an dem unteren Verschlußstück (13) der Auslaß für das Kaffeegetränk mittels eines Schlauchs (17) angeschlossen ist.

## Claims

1. A coffee dispensing machine in particular for preparing individual cups and pots having a flow heater (4, 5) comprising a housing (2, 3) for providing hot water, having a device for supplying coffee powder, having a scalding device (7) which comprises a scalding chamber (14) formed from a stationary tubular portion (8) disposed having a vertical axis (9) as well as from two locking pieces (12, 13), which scalding chamber is at least partially disposed in the flow heater and in which hot water from the flow heater circulates about at least part of the tubular portion (8) of the scalding chamber (14), and having an axial drive for moving the upper locking piece (12) in the direction of the axis (9) of the tubular portion (8), a drive for moving the upper locking piece (12) into a parking position at the side of the tubular portion (8) and into a ready position in the axis (9) as well as a vertical drive for the lower locking piece (13), characterised in that the upper locking piece (12) is disposed at a rotating arm (24) which is pivotable about a fixed bearing (25) having a vertical axis (26), that the drive for moving the upper locking piece (12) into the park position and ready position is a pivot drive (30, 29, 28) about the vertical axis (26), that the upper locking piece (12) is made of a single part and by means of the axial drive (32, 35, 36), which is disposed on the rotating arm (24), is sealingly inserted into the tubular portion (8) to reach the scalding position.

2. A coffee dispensing machine according to claim 1, characterised in that the fixed bearing (25) of the rotating arm (24) is disposed on the housing (3, 2) of the flow heater (1).

3. A coffee dispensing machine according to claim 1 or 2, characterised in that the pivot drive (30, 29, 28) of the rotating arm (24) comprises an electric motor (30) having coupled worm gear drives (29, 28), wherein the electric motor (30) and the worm gear (29) are disposed on the rotating arm (24) and the worm wheel (28) is fixedly disposed on the fixed spigot (27) of the bearing.

4. A coffee dispensing machine according to one or several of claims 1 to 3, characterised in that the axial drive (32, 35, 36) for the upper locking piece (12) comprises an electric motor (32) having coupled worm gear drives (35, 36) and a nut/spindle unit (23, 35) wherein the worm wheel (35) forming the nut is rotatably mounted on the rotating arm (24) and the one-part locking piece (12) is attached at the spindle (23).

5. A coffee dispensing machine according to claims 3 and 4, characterised in that the two electric motors (30, 32) having their axes (33, 34) parallel to each other are mounted on the rotating arm (24).

6. A coffee dispensing machine according to one or several of claims 1 to 5, characterised in that a vertical drive (20, 40, 41) is provided for the lower locking piece (13) in the form of an electric motor (20) having coupled worm gear drives (40, 41) and a nut/spindle unit.

7. A coffee dispensing machine according to one or several of claims 1 to 6, characterised in that direct current motors are provided as electric motors (20, 30, 32).

8. A coffee dispensing machine according to claims 1 to 3, characterised in that the rotating arm (24) is provided with a counter bearing (44) as a means of support.

9. A coffee dispensing machine according to one or several of claims 1 to 5, characterised in that the pivot drive (30, 29, 28) and the axial drive (32, 35, 36) for the upper locking piece (12) are independent of each other, wherein both drives are provided on the rotating arm (24) and thus move with it.

10. A coffee dispensing machine according to claim 1, characterised in that the tubular portion (8) forming the scalding chamber (14) is provided in the lower part (2) of the housing of the flow heater (1) and the outlet for the coffee drink is connected by means of a tube (17) at the lower locking piece (13).

## Revendications

1. Machine à café automatique, en particulier pour la préparation de tasses individuelles et de petits pots, avec un chauffe-eau instantané (4, 5) présentant un boîtier (2, 3) pour la préparation d'eau chaude, avec un dispositif pour l'apport de poudre de café, avec un dispositif d'infusion (7) qui présente une chambre d'infusion (14) constituée d'un tronçon de tube (8) stationnaire à axe vertical (9) ainsi que de deux pièces de fermeture (12, 13), laquelle chambre est disposée au moins partiellement dans le chauffe-eau instantané, et dans laquelle machine une partie au moins du tronçon de tube (8) de la chambre d'infusion (14) est baignée par l'eau chaude du chauffe-eau instantané, et avec un entraînement axial pour le mouvement de la pièce de fermeture supérieure (12) dans le sens de l'axe (9) du tronçon de tube (8), un entraînement pour le mouvement de la pièce de fermeture supérieure (12) en une position de repos latéralement au tronçon de tube (8) et une position de disponibilité dans l'axe (9), ainsi qu'avec un entraînement vertical pour la pièce de fermeture inférieure (13),
**caractérisée** en ce que la pièce de fermeture supérieure (12) est disposée sur un bras tournant (24) pivotant autour d'un support fixe (25) à axe vertical (26), en ce que l'entraînement pour le mouvement de la pièce de fermeture supérieure (12) en position de repos et en position de travail est un entraînement pivotant (30, 29, 28) autour de l'axe vertical (26), en ce que la pièce de fermeture (12) est d'une seule pièce et peut être introduite de manière étanche dans le tronçon de tube (8) au moyen de l'entraînement axial (32, 35, 36) qui est disposé sur le bras tournant (24), pour atteindre la position d'infusion.

2. Machine à café automatique selon la revendication 1, caractérisée en ce que le support fixe (25) du bras tournant (24) est disposé sur le boîtier (3, 2) du chauffe-eau instantané (1).

3. Machine à café automatique selon la revendication 1 ou 2, caractérisée en ce que l'entraînement pivotant (30, 29, 28) du bras tournant (24) présente un moteur électrique (30) auquel fait suite une transmission à vis et roue (29, 28), le moteur électrique (30) et la vis (29) étant disposés sur le bras tournant (24) et la roue à vis (28) étant à poste fixe sur un tourillon fixe (27) du support.

4. Machine à café automatique selon une ou plusieurs des revendications 1 à 3, caractérisée en ce que l'entraînement axial (32, 35, 36) pour la pièce de fermeture supérieure (12) présente un moteur électrique (32) auquel fait suite une transmission à vis et roue (35, 36) et une unité à écrou et vis-mère (23, 35), la roue de vis (35) constituant l'écrou étant montée rotative sur le bras tournant (24) et la pièce de fermeture (12) étant d'une seule pièce attachée à la vis-mère (23).

5. Machine à café automatique selon les revendications 3 et 4, caractérisée en ce que les deux moteurs électriques (30, 32) sont montés sur le bras tournant (24) avec leurs axes parallèles entre eux.

6. Machine à café automatique selon une ou plusieurs des revendications 1 à 5, caractérisée en ce qu'un entraînement vertical (20, 40, 41) pour la pièce de fermeture inférieure (13) est prévu sous la forme d'un moteur électrique (20) auquel fait suite une transmission à vis et roue (40, 41) et d'une unité à écrou et vis-mère.

7. Machine à café automatique selon une ou plusieurs des revendications 1 à 6, caractérisée en ce que des moteurs à courant continu sont prévus en tant que moteurs électriques (20, 30, 32).

8. Machine à café automatique selon les revendications 1 à 3, caractérisée en ce qu'un contre-support (44) est associé au bras tournant (24) pour servir d'appui.

9. Machine à café automatique selon une ou plusieurs des revendications 1 à 5, caractérisée en ce que l'entraînement de pivotement (30, 29, 28) et l'entraînement axial (32, 35, 36) pour la pièce de fermeture supérieure (12) sont indépendants l'un de l'autre, ces deux entraînements étant prévus sur le bras tournant (24) et étant, de ce fait, pivotants ensemble.

10. Machine à café automatique selon la revendication 1, caractérisée en ce que le tronçon de tube (8) constituant la chambre d'infusion (14) est prévu dans la partie inférieure (2) du boîtier du chauffe-eau instantané (1) et l'orifice de sortie du breuvage de café est raccordé à la pièce de fermeture inférieure (13) au moyen d'un tuyau souple (17).
